# EUROPEAN PATENT APPLICATION

(11) **EP 2 905 971 A1**
(43) Date of publication of application: **12.08.2015**
(21) Application number: 14305161.3
(22) Date of filing: 05.02.2014
(51) Int. Cl.: H04Q 11/00, H04L 12/437, H04L 12/24

(54) **Method for controlling protection switching in a communication network**

(71) Applicant: ALCATEL LUCENT, 92100 Boulogne-Billancourt (FR)
(72) Inventor: Gallina, Marco, 20059 Vimercate (IT); Busi, Italo, 20059 Vimercate (IT); Addeo, Christian, 20059 Vimercate (IT)
(74) Representative: Colombo, Stefano Paolo

(57) **Abstract**

It is disclosed a method for controlling protection switching in a communication network comprising a first ring and a second ring sharing a shared span. The method comprises assigning first ring identifiers to the spans of the first ring; assigning second ring identifiers to the spans of the second ring, so that the first ring identifier and the second ring identifier assigned to the shared span have different values and at least two spans of the second ring are assigned respective second ring identifiers having different values. The method further comprises, at a node of the shared span, controlling protection switching in the first ring using the first ring identifiers and/or controlling protection switching in the second ring using the second ring identifiers.

## Description

### Technical field

The present invention relates to the field of communication networks. In particular, the present invention relates to a method for controlling protection switching in a communication network (in particular, but not exclusively, an MPLS or MPLS-TP network) having a ring topology. More in particular, the present invention relates to a method for controlling protection switching in a communication network (in particular, but not exclusively, an MPLS or MPLS-TP network) comprising a number of interconnected rings.

### Background art

As known, in a packet-switched communication network each user traffic flow is divided into packets which are routed from a source node to a destination node along a path comprising one or more intermediate nodes connected by links. In the following, the term "span" will indicate the path's section between any two adjacent nodes along the path.

In an MPLS (Multi-Protocol Label Switching) network, as defined by the IETF RFC 3031 (January 2001), the path followed by the packets carrying a given user traffic flow through the network is called Label Switched Path (briefly, LSP).

Each MPLS packet comprises a header, in turn comprising at least one label. Each label comprises, *inter alia,* a 20-bit label value. Packets carrying a certain user traffic flow comprise a label value which identifies the LSP along which such packets shall be transmitted. Each intermediate node of the LSP determines the next span to which the packets shall be forwarded based on the label value of the received packets. Each intermediate node typically performs the forwarding of a received packet by performing a so-called "label swapping". According to label swapping, the node replaces the incoming label value of the received packet with an outgoing label value, such outgoing label value being associated with the same LSP.

A particular version of MPLS, which is termed MPLS-TP (MPLS Transport Profile), is employed as a network layer technology for transport networks.

MPLS and MPLS-TP networks may have various topologies, including a ring topology. In particular, the ITU-T draft Recommendation "G.8132 draft MPLS-TP shared protection ring protection" (May 2009) and the IETF Internet-Draft "MPLS-TP Ring Protection Switching (MRPS)", draft-helvoort-mpls-tp-ring-protection-switching-05.txt, (October 15, 2013) defines an MPLS-TP Ring Protection Switching (in brief, MRPS) mechanism allowing to protect user traffic flows transmitted over an MPLS-TP network comprising a number of nodes connected by links according to a ring topology. In particular, according to the MRPS mechanism, the links form two counter-rotating ringlets, namely a clockwise ringlet and a counterclockwise ringlet, carrying traffic in opposite directions relative to each other. In particular, the bandwidth of each ring is divided into a working bandwidth dedicated to working LSPs, i.e. LSPs carrying user traffic flows, and a protection bandwidth dedicated to protection LSPs. The protection LSP(s) of one ring may be used to carry working LSP(s) of the other ring in case of failure.

In particular, it is known providing a single, circular bidirectional protection LSP, also identified by the acronym "P-LSP", shared among all the working LSPs allocated in a physical ring of a MPLS or MPLS-TP network (1:N protection switching). The protection LSP comprises two counter-rotating unidirectional circular protection LSPs, one for each ringlet of the network. Each protection LSP runs through all the nodes of the network, without any predefined source node or destination node. Each protection LSP has allocated a respective protection bandwidth and a respective protection label value for each link of the ringlet. The two counter-rotating protection LSPs with their protection bandwidths and their protection label values are permanently provisioned, and are accordingly unused in normal operative conditions. In case of a link or node failure, user traffic transmitted by the affected working LSP(s) may be switched to any of the protection LSPs, e.g. according to a wrapping technique.

In the following, the expression "protection switching instance" (in particular, MRPS instance) will indicate the set of network resources at the nodes of a ring which may be used for an application/implementation of a protection switching mechanism (in particular, MRPS) in the ring as described above. Each MRPS instance is hence associated with a ring and with a bidirectional protection LSP allocated over the ring. At one node, an MRPS instance comprises the attributes and parameters that apply to support the MRPS instance itself. Provisioning an MRPS instance comprises configuring each node of the ring with the attributes and parameters suitable for supporting the MRPS instance.

According to the wrapping technique, in an exemplary case of a unidirectional failure affecting a link of the clockwise ringlet, the node that detects the failure (i.e. the node downstream the failed link) informs the node at the opposite side of the failure (i.e. the node upstream the failed link) and both perform protection switching, i.e. they both switch the MPLS packets of the working LSP(s) transmitted over the failed link to the protection LSP(s) in the opposite direction. According to the example above, the nodes adjacent to the failed link switch the packets to the counterclockwise ringlet. Therefore, from the node upstream the failed link the packets travel along the counterclockwise ringlet until they reach the node downstream the failed link. Then, this node switches such packets back to the clockwise ringlet. User traffic whose working direction is clockwise is protected in the counterclockwise direction and vice versa.

In the following, the word "ring" will be used to identify the set of links connecting a number of nodes according to a ring topology, therefore comprising both the clockwise ringlet and the counterclockwise ringlet mentioned above. A communication network comprising a number of interconnected rings will identify a network comprising a number of rings which may have one or more links (or, equivalently, spans) in common.

The nodes of the network typically implement a control protocol for controlling and coordinating the protection switching actions. An example of control protocol is the Automatic Protection Switching (APS) protocol. According to the ITU-T draft Recommendation "G.8132 draft MPLS-TP shared protection ring protection" and the IETF Internet-Draft "MPLS-TP Ring Protection Switching (MRPS)", cited above, in a MPLS-TP ring network, the wrapping technique implies that the node detecting a failure sends out, in both directions, an APS request packet to the node at the opposite side and adjacent to the failure, so that both nodes may switch the user traffic from working LSP(s) to the protection LSP of an MRPS instance. If the failure is unidirectional, the APS request packets reach the node at the opposite side and adjacent to the failure from both directions. If the failure is bidirectional, the APS request packets reach that node from one direction only. The APS request packet comprises a payload in turn comprising four fields used to carry APS-specific information:
- a destination node identifier identifying the node to which the APS request is destined;
- a source node identifier identifying the node generating the APS request;
- an APS request code comprising a four bits code identifying the request type (for instance, *inter alia,* the "signal fail" code indicates that the node is detecting a failure, the "manual switch" or "forced switch" codes indicate commands to perform the switch of user traffic from a working LSP to the protection LSP); and
- a reserved field of one byte.
In the absence of failures, according to the MRPS mechanism, each node of the network typically periodically (e.g. every 5 seconds) dispatches APS request packets to the adjacent nodes containing a "no request" APS request code.

### Summary of the invention

Large area networks may comprise a number of interconnected rings in which a number of rings may share at least one link. As mentioned above, in a MPLS or MPLS-TP network having a ring topology, one MRPS instance is typically provisioned in each ring and one protection LSP is shared by all the LSP(s) carrying traffic over the ring.

The inventors have noticed that, in order to control and coordinate the protection switching in a MPLS or MPLS-TP network with a number of interconnected rings sharing at least one link, at the nodes of the network each MRPS instance should be identified though a respective ring identifier, or simply ring ID. At a node, in particular a node of a link shared among two or more rings, the ring ID allows distinguishing the different MRPS instances provisioned over the shared link.

The ring ID of an MRPS instance should be carried within the control packets (e.g. the APS request packets) used for controlling the switching of traffic from working LSPs to the protection LSP associated with the MRPS instance, according to the wrapping technique described above.

In principle, it is possible to identify each MRPS instance with a unique ring ID, i.e. a same ring ID over all the spans of the ring over which the instance is provisioned. In other words, each node of the ring should use the same ring ID in the control packets exchanged with the adjacent nodes. This means that in a network of interconnected rings, the MRPS instances provisioned over rings that share at least one link should be identified with different ring IDs in order to distinguish their control packets.

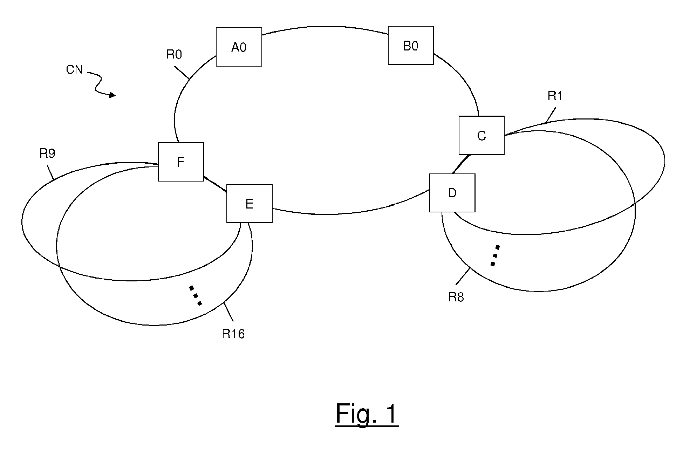

However, using the same ring ID over all the spans of a ring in a network of interconnected rings has at least one drawback. This will be clearer in the following, with reference to an exemplary situation illustrated in Figure 1.

Figure 1 shows a network CN comprising 17 rings, namely R0, ..., R16. In this exemplary network, ring R0 comprises six nodes, namely nodes A0, B0, C, D, E, F. Ring R0 is interconnected with rings R1-R8 on its link between node C and node D and it is interconnected with rings R9-R16 on its link between node E and node F. It is assumed that all nodes may support up to 16 MRPS instances. In this case, the value of a ring ID handled by each node may range from 0 to 15.

It is further assumed that, according to a ring ID assignment scheme as that described above, namely a scheme providing one different ring ID for any MRPS instance, such ring ID having a same value in all the spans of the ring, the MRPS instances provisioned in rings R1-R8 are identified by ring IDs ranging from 0 to 7, respectively, while the MRPS instances provisioned in rings R9-R16 are identified by ring IDs ranging from 8 to 15, respectively.

As a consequence of this assignment, in this exemplary situation, there is no possibility that an MRPS instance is provisioned in ring R0 since there is no value of ring ID available for identifying this MRPS instance. In principle, this happens in spite of the fact that in ring R0 there are resources available for supporting an MRPS instance since each node is capable of supporting up to 16 MRPS instances. In this exemplary situation, each of nodes C, D, E, F is provisioned with 8 MRPS instances, and the other nodes are not provisioned with any MRPS instance.

Disadvantageously, usage of ring IDs as described above leads to underutilization or loss of network resources that are in principle available for provisioning MRPS instances. Moreover, it causes a limitation of the network scalability. Indeed, addition of further rings to an already deployed network (for instance, addition of ring R0 for interconnecting already deployed rings R1-R16 of Figure 1) may be problematic as, if the MRPS instances provisioned in the rings of the deployed network are already assigned all the available ring IDs, as described above with reference to ring R1-R16 of Figure 1, any further ring may not be provided with any MRPS instance.

In view of the above, the Applicant has faced the problem of providing a method for controlling protection switching in a communication network (in particular, but not exclusively, an MPLS or MPLS-TP network) having a ring topology, in particular comprising a number of interconnected rings, which overcomes the aforesaid drawbacks. In particular, the Applicant has faced the problem of providing a method for controlling protection switching in a communication network (in particular, but not exclusively, an MPLS or MPLS-TP network) comprising a number of interconnected rings which allow to efficiently exploit all the available network resources and which do not limit the network scalability.

The inventors perceived that the problem above may be solved by a method for controlling protection switching in a communication network comprising a first ring and a second ring sharing a shared span, such method comprising assigning first ring identifiers to the spans of the first ring; assigning second ring identifiers to the spans of the second ring, so that the first ring identifier and the second ring identifier assigned to the shared span have different values and at least two spans of the second ring are assigned respective second ring identifiers having different values. The method further comprises, at a node of the shared span, controlling protection switching in the first ring using the first ring identifiers and/or controlling protection switching in the second ring using the second ring identifiers.

According to a first aspect, the present invention provides a method for controlling protection switching in a communication network, the communication network comprising a number of nodes interconnected to form a first ring and a second ring, wherein the network comprises a shared span between the first ring and the second ring, a first span and a second span, wherein the shared span connects a first node and a second node of the communication network, the first span connects the first node and a third node of the first ring and the second span connects the first node and a fourth node of the second ring, the first node comprising, at a first side thereof, a first port towards the shared span and, at a second opposite side thereof, a second port towards the first span and a third port towards the second span, the method comprising:
a) assigning first ring identifiers to the spans of the first ring;
b) assigning second ring identifiers to the spans of the second ring, so that the first ring identifier and the second ring identifier assigned to the shared span have different values and at least two spans of the second ring are assigned respective second ring identifiers having different values; and
c) at the first node, controlling protection switching in the first ring using, on the first port, the first ring identifier assigned to the shared span and/or, on the second port, the first ring identifier assigned to the first span, and/or controlling protection switching in the second ring using, on the first port, the second ring identifier assigned to the shared span and/or, on the third port, the second ring identifier assigned to the second span.

Preferably, step a) comprises assigning a first pre-determined value of first ring identifiers to all the spans of the first ring that are not shared with the second ring.

Preferably, step b) comprises assigning a second pre-determined value of second ring identifiers to all the spans of the second ring that are not shared with the first ring.

Preferably, the first pre-determined value and the second pre-determined value are equal.

Preferably, the method further comprises, at the first node and before step c), configuring the first node with first information comprising the first ring identifier assigned to the shared span, an identifier of the first port, the first ring identifier assigned to the first span and an identifier of the second port, and second information comprising the second ring identifier assigned to the shared span, an identifier of the first port, the second ring identifier assigned to the second span and an identifier of the third port.

Preferably, controlling protection switching at step c) comprises issuing or forwarding a control packet.

Preferably, using comprises inserting the first ring identifier assigned to the shared span or the first ring identifier assigned to the first span or the second ring identifier assigned to the shared span or the second ring identifier assigned to the second span into the control packet.

Preferably, the method further comprises, at the first node, receiving a further control packet from the third node, the further control packet being directed to a further node of the first ring, picking out from the received control packet the first ring identifier assigned to the first span, identifying the second port though which the further control packet is received and, on the basis of the first ring identifier and the identifier of the second port, recovering the first ring identifier assigned to the shared span and the identifier of the first port, replacing, within the further control packet, the first ring identifier assigned to the first span with the first ring identifier assigned to the shared span and forwarding the further control packet to the second node through the first port.

According to a second aspect, the present invention provides a communication network comprising a number of nodes interconnected to form a first ring and a second ring, wherein the network comprises a shared span between the first ring and the second ring, a first span and a second span, wherein the shared span connects a first node and a second node of the communication network, the first span connects the first node and a third node of the first ring and the second span connects the first node and a fourth node of the second ring, the first node comprising, at a first side thereof, a first port towards the shared span and, at a second opposite side thereof, a second port towards the first span and a third port towards the second span, the network further comprising a network management system, the network management system being configured to:
- assign first ring identifiers to the spans of the first ring; and
- assign second ring identifiers to the spans of the second ring, so that the first ring identifier and the second ring identifier assigned to the shared span have different values and at least two spans of the second ring are assigned respective second ring identifiers having different values,
wherein the first node is configured to control protection switching in the first ring using, on the first port, the first ring identifier assigned to the shared span and/or, on the second port, the first ring identifier assigned to the first span, and/or control protection switching in the second ring using, on the first port, the second ring identifier assigned to the shared span and/or, on the third port, the second ring identifier assigned to the second span.

Preferably, the communication network is an MPLS or MPLS-TP communication network.

### Brief description of the drawings

The present invention will become clearer by reading the following detailed description, given by way of example and not of limitation, to be read by referring to the accompanying drawings, wherein:
- Figure 1 schematically shows an exemplary communication network comprising a number of interconnected rings;
- Figure 2 shows a portion of the communication network of Figure 1 comprising two rings;
- Figure 3 is a flowchart illustrating the steps of the method according to the present invention;
- Figure 4 is a flowchart illustrating in more detail one of the steps of Figure 3;
- Figure 5 is a table reporting an exemplary outcome of the ring ID assignment procedure according to the present invention;
- Figure 6 shows the operation of the network of Figure 2, in case of a link failure affecting a working LSP; and
- Figure 7 shows the operation of the network of Figure 2, in case of a link failure affecting a further working LSP.

### Detailed description of preferred embodiments of the invention

Figure 1 shows the exemplary communication network CN already described above. This network is suitable for implementing the method according to embodiments of the present invention. The communication network CN preferably is a packet-switched network. More particularly, preferably the communication network CN is an MPLS network or an MPLS-TP network.

As already mentioned above, the communication network CN preferably comprises a number of nodes arranged according to a ring topology. In particular, the communication network CN preferably comprises a number of interconnected rings, namely 17 interconnected rings R0-R16. Each ring preferably comprises a respective number of nodes.

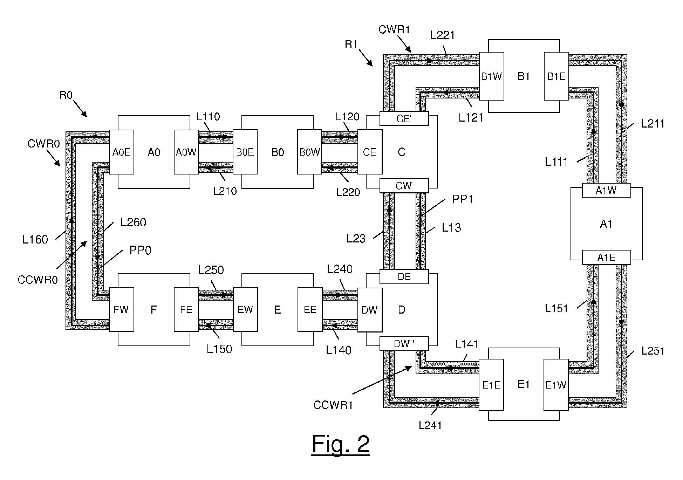

Figure 2 shows, for sake of simplicity, only a portion of the communication network CN comprising two rings, namely ring R0 and ring R1. By way of non limiting example, ring R0 comprises six nodes A0, B0, C, D, E, F, while ring R1 comprises five nodes, A1, B1, C, D, E1. Ring R0 further comprises a number of physical links (e.g. fiber optics links) connecting the nodes A0, B0, C, D, E, F. Analogously, ring R1 further comprises a number of physical links (e.g. fiber optics links) connecting the nodes A1, B1, C, D, E1. Ring R0 and ring R1 are interconnected in that they share a common link, namely the link between nodes C and D.

In the whole communication network CN, the link between nodes C and D is shared between ring R0 and rings R1-R8. Further, the link between nodes E and F is shared between ring R0 and rings R9-R16.

In particular, ring R0 comprises six first unidirectional links L110, L120, L13, L140, L150, L160 which connect the nodes A0-B0, B0-C, C-D, D-E, E-F, F-A0 in a clockwise direction, forming a clockwise ringlet CWR0. Ring R0 further comprises six second unidirectional links L210, L220, L23, L240, L250, L260 which connect the nodes A0-B0, B0-C, C-D, D-E, E-F, F-A0 in a counterclockwise direction, forming a counterclockwise ringlet CCWR0.

Analogously, ring R1 comprises five first unidirectional links L111, L121, L13, L141, L151 which connect the nodes A1-B1, B1-C, C-D, D-E1, E1-A1 in a counterclockwise direction, forming a counterclockwise ringlet CCWR1. Ring R1 further comprises five second unidirectional links L211, L221, L23, L241, L251 which connect the nodes A1-B1, B1-C, C-D, D-E1, E1-A1 in a clockwise direction, forming a clockwise ringlet CWR1.

The unidirectional links L13 and L23 are shared between ring R0 and rings R1-R8 in the communication network CN.

Each node of the communication network CN is preferably provided with topology information related to the ring to which the node belongs. In particular, each node A0, B0, C, D, E, F of ring R0 is preferably provided with topology information relating to ring R0, and each node A1, B1, C, D, E1 of ring R1 is provided with topology information relating to ring R1. The topology information of a node preferably comprises a node identifier (or, simply, node ID). Moreover, the topology information preferably comprises the number of nodes which form the ring to which the node belongs. Alternatively, the topology information may comprise a ring map, namely a sequential list of the nodes which form the ring to which the node belongs. From the ring map, each node may directly derive the number of nodes which form the corresponding ring. The network operator may provide the topology information to each node of a ring upon deployment of the ring. Each node preferably stores the topology information at a respective local database (not shown in the drawings for simplicity).

Preferably, each node of a ring is preferably provided with a number of west-side ports and a number of east-side ports. Figure 2 shows the ports of the nodes belonging to ring R0 and ring R1. Each west-side port preferably originates/terminates the links connecting the node itself, on its west side, with an adjacent node belonging to the same ring or to an interconnected ring. Each east-side port preferably originates/terminates the links connecting the node itself, on its east side, with an adjacent node belonging to the same ring or to an interconnected ring. In ring R0, for instance, node A0 preferably comprises a west-side port AOW originating/terminating the links connecting node A0 and node B0, and an east-side port AOE originating/terminating the links connecting node A0 and node F. In ring R0, node C comprises one west-side port CW originating/terminating the links connecting node C and node D and nine east-side ports originating/terminating the links connecting node C with its east-side adjacent nodes along rings R0 and R1-R8 (namely, nodes B0, B1, etc.). Figure 2 shows only two east-side ports of node C, namely a first east-side port CE towards node B0 and a second east-side port CE' towards node B1. Further in Figure 2 it is shown that node D comprises an east-side port DE towards node C, a first west-side port DW towards node E of ring R0 and a second west-side port DW' towards node E1 of ring R1.

A number of working paths (in particular, working LSPs, in case the communication network CN is either an MPLS network or an MPLS-TP network) may be allocated in each ring along the clockwise direction and counterclockwise direction. Each working path has preferably associated a set of working labels (one for each span of the working path) allowing the nodes to properly handle packets to be transmitted along the working path.

Preferably, the nodes of the network CN are configured to implement a protection switching mechanism (in particular, the MPLS-TP Ring Protection Switching, or MRPS, mechanism) and the wrapping technique described above. Hence, a number of protection switching instances (in particular, MRPS instances) may be provisioned in the communication network CN, in particular one protection switching instance may be provisioned in each ring of the communication network for providing protection to all the working paths allocated on the clockwise ringlet and counterclockwise ringlet.

In the communication network CN, the nodes of each ring are preferably provisioned with a protection switching instance. Therefore, in each ring of the communication network CN, a unidirectional protection path is preferably allocated on the counterclockwise ringlet, which provides a shared protection for all the working paths allocated on the clockwise ringlet. Further, another protection path is preferably allocated on the clockwise ringlet, which provides a shared protection for all the working paths allocated on the counterclockwise ringlet. The two protection paths allocated in each ring basically form a unique circular bidirectional protection path and are associated with the respective protection switching instance.

In particular, in ring R0, a protection path PP0 is preferably allocated along the counterclockwise direction CCWR0 and provides a shared protection for all the working paths allocated along the clockwise direction CWR0. The protection path PP0 is a unidirectional circular path which connects all the nodes A0, B0, C, D, E, F of the ring R0. Hence, the protection path PP0 preferably has allocated a protection bandwidth on each one of the unidirectional links L210, L220, L23, L240, L250, L260 forming the counterclockwise ringlet CCWR0. The protection path PP0 also preferably has associated a set of protection labels (one for each span of the protection path PP0) allowing all the nodes A0, B0, C, D, E, F to properly handle packets to be transmitted along the protection path PP0, as it will be described in detail herein after.

In ring R0, another protection path is allocated along the clockwise direction CWR0 (not shown in Figure 2).

Figure 2 shows also a protection path PP1 (in particular, a protection LSP, or P-LSP) allocated in ring R1. The protection path PP1 is preferably allocated along the counterclockwise direction in ring R1 and provides a shared protection for all the working paths allocated along the clockwise direction in ring R1. More particularly, the protection path PP1 is a unidirectional circular path which connects all the nodes A1, B1, C, D, E1 of ring R1. Hence, the protection path PP1 preferably has allocated a protection bandwidth on each one of the unidirectional links L111, L121, L13, L141, L151 forming the counterclockwise ringlet. The protection path PP1 also preferably has associated a set of protection labels (one for each span of the protection path PP1) allowing all the nodes A1, B1, C, D, E1 to properly handle packets to be transmitted along the protection path PP1. Also in the ring R1, a further protection path is allocated along the clockwise direction (not shown in Figure 2).

Moreover, preferably, each node of the communication network CN, in particular nodes A0, B0, C, D, E, F of ring R0 and nodes A1, B1, C, D, E1 of ring R1, comprises a respective forwarding table. The forwarding table comprises a number of rows, each row containing a couple of labels, namely an incoming label associated with an incoming port of the node and an outgoing label associated with an outgoing port of the node. The node preferably uses the incoming label of a packet to find, within the forwarding table, the corresponding outgoing label and the outgoing port (i.e. the outgoing label and the outgoing port associated with the next span along the working/protection path of the packet) to which the packet has to be forwarded.

Each node of the communication network is preferably configured to implement a control protocol for controlling and coordinating protection switching actions with the other nodes of the network. Preferably, the control protocol is the APS (Automatic Switch Protocol) protocol. In particular, each west-side (east-side) port of a node is preferably configured to exchange control packets such as APS requests with a corresponding east-side (west-side) port in the adjacent node. Each control packet preferably comprises a destination node identifier and a source node identifier.

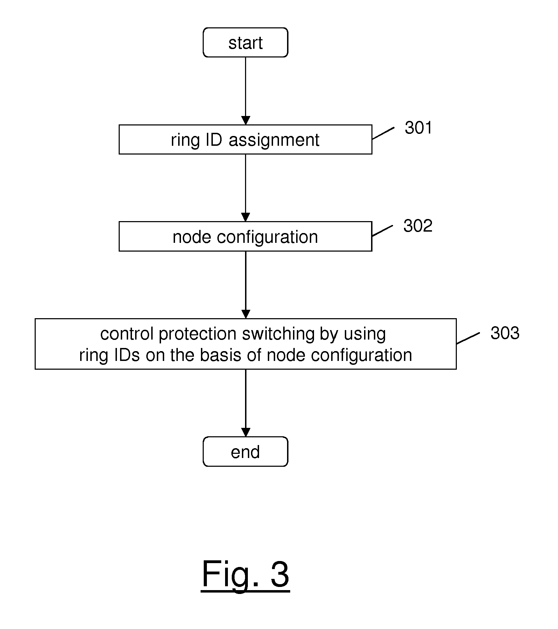

Figure 3 shows a flowchart illustrating the steps of the method for controlling protection switching within the communication network CN according to embodiments of the present invention.

Upon provision of a protection switching instance in a ring of the considered communication network CN, the method provides for, at step 301, assigning to the protection switching instance a set of ring identifiers (or, simply, ring IDs) on a span-by-span basis. In particular, each protection switching instance is preferably assigned a set of ring IDs comprising a number of ring IDs equal to the number of spans of the ring over which the protection switching instance is to be provisioned. In other words, at step 301, each span of the ring over which the protection switching instance is to be provisioned is assigned a respective ring ID.

For instance, upon its provisioning, the protection switching instance in ring R0 is associated with six ring IDs, namely a first ring ID on span A0-B0, a second ring ID on span B0-C, a third ring ID on span C-D, a fourth ring ID on span D-E, a fifth ring ID on span E-F and a sixth ring ID on span F-A0. Analogously, upon its provisioning, the protection switching instance in ring R1 is associated with five ring IDs, namely a first ring ID on span A1-B1, a second ring ID on span B1-C, a third ring ID on span C-D, a fourth ring ID on span D-E1 and a fifth ring ID on span E1-A1.

According to embodiments of the present invention, the ring IDs assigned to a protection switching instance may have different values on the different spans of the corresponding ring. Moreover, according to embodiments of the present invention, when a number of protection switching instances (such number being higher than 1) are provisioned over a corresponding number of interconnected rings, the ring IDs of at least one protection switching instance is assigned different values on at least two spans of the corresponding ring.

According to preferred embodiments of the present inventions, the ring IDs of a protection switching instance are assigned to the instance by a network operator or a Network Management System (NMS). The procedure for assigning the ring IDs may be carried out either manually or automatically through execution of a dedicated software installed on the NMS.

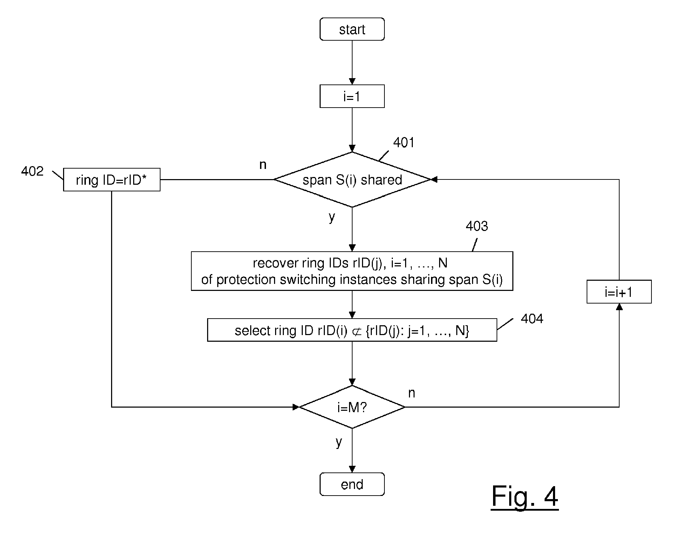

The assignment of the ring IDs to a protection switching instance in the communication network CN at step 301 of Figure 3 is preferably performed according to the steps illustrated in the flowchart of Figure 4.

It is assumed, generically, that the ring over which the considered protection switching instance is to be provisioned has a number M of spans S(i), i=1, ..., M, wherein M is an integer number higher than 1. For each span S(i) of the considered ring, steps 401-404 are preferably carried out. At step 401, the operator or NMS preferably checks whether the span S(i) is shared among two or more rings of the communication network CN.

In the negative, the operator preferably assigns to the span S(i) a ring ID having a given value rID* (step 402) which may be pre-defined by the network operator. In the meanwhile, the value rID* is stored in a database at the NMS as associated with span S(i).

In the affirmative, the operator or NMS preferably recovers from the database the ring ID values already assigned to span S(i) (step 403) for already provisioned protection switching instances. These ring IDs are indicated in the flow chart of Figure 4 as rID(j), j=1, ..., N, where N is an integer number equal to or higher than 1 and representing the number of already provisioned protection switching instances of rings sharing span S(i) with the considered ring. Then, the operator or NMS preferably selects a ring ID value rID(i) for span S(i) so that the selected value rID(i) is different from all the ring ID values rID(j), j=1, ..., N already used for span S(i) (step 404). In the meanwhile, this value rID(i) is stored in the database as associated with span S(i).

As already mentioned herein above, steps 401-404 are preferably performed for each span S(i), i=1, ..., M of the considered ring, until each span S(i) is assigned a respective ring ID value rID(i). It is to be noticed that the ring IDs of spans of the considered ring which are not shared with other rings may have all the same given value. Further, it is to be noticed that all the spans of the communication network CN that are not shared between rings may be assigned the same given value of ring ID.

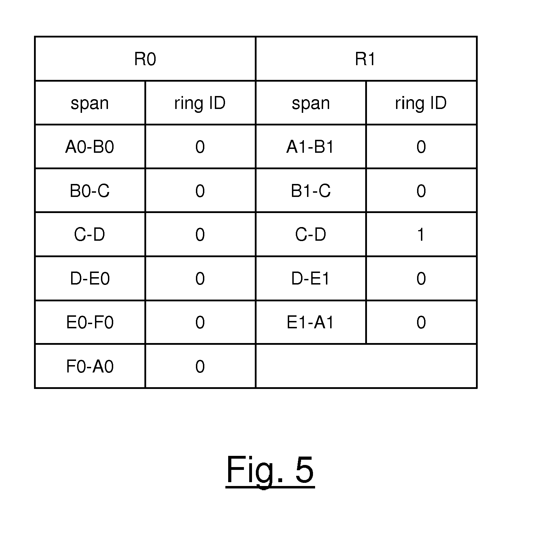

Figure 5 shows a table comprising the ring ID values according to an exemplary outcome of the assignment procedure applied to an exemplary two-ring network comprising only ring R0 and ring R1 as shown in Figure 2. It is assumed that the protection switching instance of ring R0 is to be provisioned first. In this case, applying the steps 401-404 described above, upon provisioning of the protection switching instance, the operator or NMS may assign a given value rID*=0 to all the spans of ring R0. Span C-D is the only span which is shared with ring R1 but since no ring ID has been already assigned to this span, the operator or NMS may choose an arbitrary value, e.g. the same value used for the other spans of ring R0. Considering then the protection switching instance of ring R1, the operator or NMS, upon provisioning of the protection switching instance, may assign the given value rID*=0 also to the spans of ring R1 that are not shared with ring R0, and a different value, for instance rID(i)=1, to the shared span C-D.

With reference to the whole communication CN of Figure 1, when the assignment of ring IDs is performed, a possible exemplary outcome may be the following:
- for the protection switching instance to be provisioned in ring R0, the operator or NMS may assign a given value, for instance rID*=0, to the ring IDs of all spans of ring R0;
- for the protection switching instances to be provisioned in each of rings R1-R8 which share span C-D with ring R0, the operator or NMS may assign the given value rID*=0 to the ring IDs of all spans of the ring R1-R8 except shared span C-D; on shared span C-D, the operator or NMS preferably assigns different values of ring IDs for the different protection switching instances, namely one different value for each protection switching instance, e.g. rID(i)=1 for the protection switching instance in ring R1, rID(i)=2 for the protection switching instance in ring R2, rID(i)=3 for the protection switching instance in ring R3, and so on; and
- for the protection switching instances to be provisioned in each of rings R9-R16 which share span E-F with ring R0, the operator or NMS may assign the given value rID*=0 to the ring IDs of all spans of the ring R9-R16 except shared span E-F; on shared span E-F, the operator or NMS preferably assigns different values of ring IDs for the different protection switching instances, namely one different value for each protection switching instance, for instance rID(i)=1 for the protection switching instance allocated in ring R9, rID(i)=2 for the protection switching instance allocated in ring R10, rID(i)=3 for the protection switching instance allocated in ring R11, and so on.

At step 302, the method of the present invention provides for configuring the nodes of the communication network according to the outcome of the assignment procedure at step 301, i.e. updating the topology information of the nodes of the communication network CN by adding to this information the ring ID values assigned to all the protection switching instances to be supported by the node at step 301. The updating is preferably performed by the NMS.

According to preferred embodiments of the present invention, updating the topology information of a node comprises providing each node of the communication network CN with a couple of ring IDs per each protection switching instance to be supported by the node, the couple of ring IDs comprising:
- a west-side ring ID, i.e. the ring ID of the span of the ring over which the protection switching instance is provisioned on the west side of the node; and
- an east side ring ID, i.e. the ring ID of the span of the ring over which the protection switching instance is provisioned on the east side of the node .
Moreover, updating the topology information comprises associating each protection switching instance to a respective west-side port and a respective east-side port of the node.

Therefore, at a node, at the end of step 302, each protection switching instance is preferably associated with respective information comprising four attributes, namely its west-side ring ID, an identifier of its west-side port, its east-side ring ID and an identifier of its east-side port.

As described above, the west-side ring ID and east-side ring ID of a couple of ring IDs may have the same value or different values. In particular, according to the above, if the node belongs to a span which is shared by at least two rings, the west side ring ID and the east-side ring ID of one couple of ring IDs may have the same value (i.e. one protection switching instance may be assigned with equal ring ID values on both the spans on the west-side and east-side of the node), while the west side ring ID and the east-side ring ID of the other couples of ring IDs have different values. Moreover, at a node, all the west-side (east-side) ring IDs associated with a shared span on the west side (east side) of the node have different values.

At a node, the couples of ring IDs are preferably stored in the local database storing the topology information of the node. Preferably, updating the topology information at step 302 is performed by using a Transaction Language 1 (TL1) command which, for each protection switching instance, sets the values of two dedicated parameters within the local database to the values of the west-side ring ID and the east-side ring ID. This same command preferably sets the values of two other parameters within the local database to the values of the associated west-side port identifier and east-side port identifier. Alternatively, updating is performed by means of a Graphical User Interface (GUI) accessible by the network operator that manually enters the west-side ring ID and the east-side ring ID values (and the identifiers of the associated west-side port and east-side port) to be stored at each node.

At a node, each couple of west-side ring ID and east-side ring ID is preferably used by the west-side port and east-side port associated with the protection switching instance, respectively, for processing, i.e. issuing/forwarding/terminating, the control packets related to the protection switching instance, as it will be described herein after.

For example, within the two-ring communication network of Figure 2, node C is provided with the couple of east-side ring ID assigned to span B0-C and west-side ring ID assigned to span C-D for the protection switching instance in ring R0, and with the couple of east-side ring ID assigned to span B1-C and west-side ring ID assigned to span C-D for the protection switching instance in ring R1. In particular, according to the outcome of the ring ID assignment procedure illustrated in Figure 5, node C is provided with a first couple of ring IDs equal to (0, 0) associated with the protection switching instance in ring R0 and a second couple of ring IDs equal to (0,1) associated with the protection switching instance in ring R1. In the notation above, within the parentheses, the first number indicates the east-side ring ID of a couple and the second number indicates the west-side ring ID of the same couple. The first couple of ring ID values (0, 0) is associated with east-side port CE and west side port CW, respectively. The second couple of ring ID values (0, 1) is associated with east-side port CE' and west-side port CW, respectively. Therefore, at node C, the east-side port CE towards node B0 and the west-side port CW towards node D are both preferably configured to use a ring ID value equal to 0 for processing the control packets of the protection switching instance in ring R0. Moreover, the east-side port CE' towards node B1 is preferably configured to use a ring ID value equal to 0 for processing the control packets of the protection switching instance in ring R1, while the west-side port CW towards node D is preferably configured to use a ring ID value equal to 1 for processing the control packets of the protection switching instance in ring R1.

Considering the whole communication network CN of Figure 1, at node C, the east-side ring ID value is equal to 0 on the east-side ports CE, CE' towards nodes, B0, B1, B2, etc. of rings R0, R1, R2, etc. Indeed, the protection switching instances provisioned in rings R0, R1-R8 use different spans on the east side of node C. On the contrary, these same protection switching instances use a same span on the west-side of node C (namely, the shared span C-D) and hence they are assigned different west-side rings ID values on the west-side port CW of node C. Different values of west-side ring IDs are necessary towards node D in order to distinguish the control packets related to the different protection switching instances, as it will be clearer herein after. Similarly, at node D, the west-side ring ID value is equal to 0 on the west-side ports DW, DW' towards nodes, E0, E1, E2, etc. of rings R0, R1, R2, etc. On the contrary, different east-side rings ID values are used on the east-side port DE of node D for the protection switching instances provisioned in rings R0 and R1-R8 sharing span C-D. Same considerations apply to the ring IDs stored at node E and node F, *mutatis mutandis.*

At step 303, the method of the present invention provides for controlling protection switching according to embodiments of the present invention.

In particular, preferably, controlling protection switching comprises issuing/forwarding control packets by each node for the protection switching instance(s) provisioned in the ring(s) to which the node belongs. Control packets are preferably sent to adjacent nodes and they may be directed to other nodes of the communication network CN. Control packets are sent both in the absence of failures and in presence of failures in the communication network CN.

According to the method of the present invention, upon issuance of a control packet for a given protection switching instance, each node preferably inserts in the control packet the appropriate ring ID, namely the ring ID assigned to the span towards which the packet is to be forwarded along the ring over which the given protection switching instance is provisioned. If the packet is to be forwarded through the east-side port associated with the given protection switching instance, the node preferably inserts in the control packet the corresponding east-side ring ID. Analogously, If the packet is to be forwarded through the west-side port associated with the given protection switching instance, the node preferably inserts in the control packet the corresponding west-side ring ID.

Preferably, the control packet is an APS request packet and the (east-side or west-side) ring ID value is inserted into the reserved field of the APS request packet payload.

Each node may perform a swapping operation on the ring ID value carried within a received control packet. In particular, when a node receives, through an incoming east-side (west-side) port, a control packet which is to be forwarded to an adjacent node, the node preferably picks out the east-side (west-side) ring ID carried in the control packet and preferably identifies the incoming east-side (west-side) port though which the packet has been received, i.e. determines the identifier of the incoming port. Then, the node, on the basis of these information (incoming ring ID and incoming port identifier), preferably identifies the protection switching instance associated with that east-side (west-side) ring ID. Then, the node preferably recovers the corresponding west-side (east-side) ring ID of the couple of ring IDs associated with the protection switching instance and the corresponding outgoing west-side (east-side) port identifier. Then, the node preferably replaces the east-side (west-side) ring ID value within the control packet with the recovered west-side (east-side) ring ID value. Finally the node preferably forwards the control packet to the next span along the ring through the outgoing west-side (east-side) port. If the east-side (west-side) ring ID and the west-side (east-side) ring ID have the same value, the node does not modify the control packet and simply forwards it to the next span.

It is to be noticed that, advantageously, according to the method of the present invention, each control packet carries the appropriate ring ID associated with the corresponding protection switching instance. Indeed, since each protection switching instance is associated with a couple of east-side and west-side ring IDs and a corresponding couple of east-side and west-side ports, a node supporting that protection switching instance is always enabled to correctly identify the value of ring ID to be inserted in a control packet issued/forwarded to a next span, and the corresponding outgoing port.

In particular, in the absence of failures, each node of the communication network CN preferably periodically dispatches control packets to its adjacent nodes in both directions indicating that protection switching is not required. The period may be equal to 5 seconds. In particular, in case the control protocol is the APS control protocol, each node preferably dispatches APS requests packets containing a "no request" APS request code. Each of these control packet contains the appropriate ring ID according to the above.

In case of failure, each node of the communication network CN preferably applies the wrapping technique for controlling and performing protection switching. The wrapping technique implies that a node detecting the failure issues and sends a number of control packets (e.g. three control packets) to the opposite node adjacent to the failure. Moreover, this node switches the traffic of all working path(s) transmitted towards the failed span to the protection path in the opposite direction. The switched traffic travels to the other node adjacent to the failure where it is switched back onto the working path(s). In case the control protocol is the APS control protocol, these control packets are APS requests packets containing for instance, a "signal fail" APS request code. Also in this case, each control packet carries the appropriate ring ID according to the method of the present invention described above.

Each intermediate node between the node that is detecting the failure and the other node adjacent to the failure preferably performs the swapping operation on the ring ID value carried within the control packet as described above.

This way, advantageously, a node of a span shared by at least two rings is capable of distinguishing the control packets of the different protection switching instances provisioned over the shared span. This guarantees that protection switching is performed in a correct way so that user traffic is switched to the appropriate protection path.

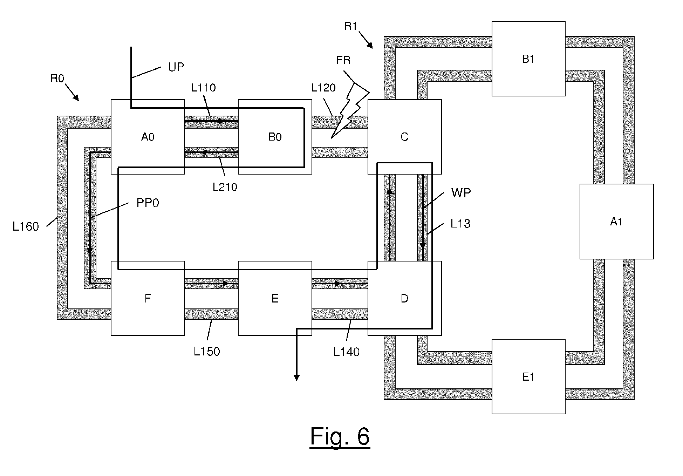

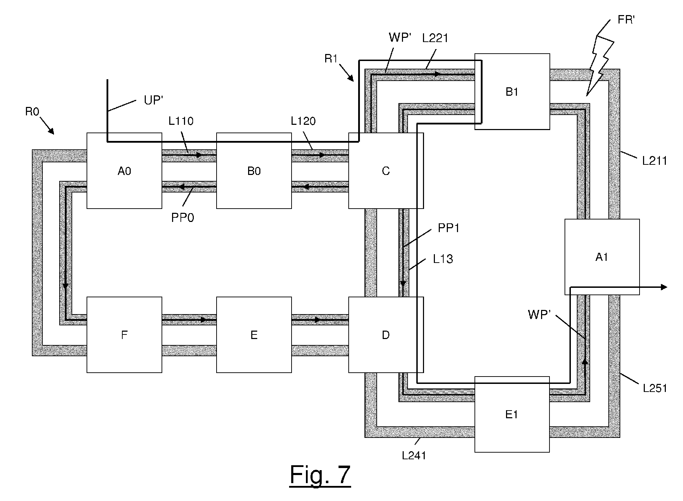

Controlling protection switching of step 303 according to the method of the present invention and subsequent implementation of the wrapping technique will be described in the following with reference to two exemplary situations illustrated in Figures 6 and 7 for the exemplary two-ring network of Figure 2.

Figure 6 shows a working path WP (in particular, a working LSP) allocated on the clockwise ringlet CWR0 of ring R0. The working path WP of Figure 6 originates at node A0 (which is accordingly its source node) and terminates at node E (which is accordingly its destination node). This is not limiting since working paths may originate and terminate at any node of the ring R0. The working path WP preferably has working bandwidth on the links L110, L120, L13 and L140. The working path WP also preferably has associated a set of working labels (one for each span of the working path) allowing nodes A0, B0, C, D and E to properly handle packets to be transmitted along the working path WP.

In a failure-free scenario, the source node A0 encapsulates user traffic to be transmitted to the destination node E0 along the working path WP in user packets UP, which are then carried by the working path WP along the links L110, L120, L13 and L140. The intermediate nodes B0, C and D use the label value of the received user packets UP for determining the next span to which the user packets UP shall be forwarded. Besides, the destination node E0 uses the label value of the received user packets UP for determining that the user packets UP shall be terminated and processed for extracting the original user traffic.

It is now assumed that a failure FR occurs on one of the unidirectional links L110, L120, L13, L140 supporting the working path WP, e.g. link L120, as shown in Figure 6 and that node C detects the failure FR.

According to the wrapping technique, when the failure FR occurs, node C sends node C sends another control packet in particular an APS request packet, to node B0 along link L22, and another control packet, in particular an APS request packet, to node B0 along links L13, L140, L150, L160 and L110 in the clockwise direction around ring R0.

According to the present invention, node C, which belongs to the span C-D that is shared between rings R0 and R1, preferably stores a first couple of east-side ring ID and west-side ring ID (i.e. an east-side ring ID associated with span B0-C and a west-side ring ID associated with span C-D) and a corresponding couple of identifiers for the east-side port CE and the west-side port CW associated with the protection switching instance provisioned in ring R0. Node C also stores a second couple of east side ring ID and west-side ring ID (i.e. an east-side ring ID associated with span B1-C and a west-side ring ID associated with span C-D) and a corresponding couple of identifiers for the east-side port CE' and the west-side port CW associated with the protection switching instance provisioned in ring R1. According to the assignment scheme of Figure 5, the first couple of ring IDs is equal to (0, 0) and the second couple of ring IDs is equal to (0, 1).

According to preferred embodiments of the present invention, before sending the control packet to node B0 along link L220, node C preferably inserts within the control packet the ring ID assigned to the span B0-C for the protection switching instance provisioned in ring R0 in which the failure FR occurred, namely a ring ID equal to 0 according to the assignment scheme of Figure 5, and sends the control packet to node B0 though its east-side port CE.

Further, before sending the control packet to node D, node C preferably inserts within the control packet the ring ID assigned to the span C-D for the protection switching instance provisioned in ring R0 in which the failure FR occurred. In particular, node C preferably inserts within the control packet the west-side ring ID assigned to span C-D in ring R0, i.e. a ring ID equal to 0 according to the assignment scheme of Figure 5, and sends the control packet to node D though its west-side port CW.

According to the present invention, node D, which belongs to the span C-D that is shared between rings R0 and R1, preferably stores a first couple of east-side ring ID and west-side ring ID associated with the protection switching instance provisioned in ring R0 (i.e. an east-side ring ID associated with span C-D and a west-side ring ID associated with span D-E) and a corresponding couple of identifiers for the east-side port DE and the west-side port DW associated with the protection switching instance provisioned in ring R0. Moreover, node D preferably stores a second couple of east side ring ID and west-side ring ID associated with the protection switching instance provisioned in ring R1 (i.e. an east-side ring ID associated with span C-D and a west-side ring ID associated with span D-E1) and a corresponding couple of identifiers for the east-side port DE and the west-side port DW' associated with the protection switching instance provisioned in ring R1. According to the assignment scheme of Figure 5, the first couple of ring IDs is equal to (0, 0) and the second couple of ring IDs is equal to (1, 0).

When the control packet reaches node D though its east-side port DE, node D preferably recovers, based on the ring ID value in the received control packet and on the identifier of the incoming east-side port DE, the west-side ring ID of the couple of ring IDs associated with the protection switching instance provisioned in ring R0, which is equal to 0. Moreover, node D recovers the identifier of the west-side port associated with the switching instance provisioned in ring R0, namely west-side port DW. Therefore, since, in the exemplary situation of Figure 5, the protection switching instance provisioned in ring R0 is associated with the same ring ID on all its spans, including shared span C-D, node D forwards the control packet to node E through its west-side port DW without modifying the ring ID.

Upon reception of the control packet from node D, node E preferably recovers, based on the ring ID value in the received control packet and the identifier of the incoming east-side port EE, the west-side ring ID of the couple of ring IDs associated with the protection switching instance provisioned in ring R0, namely the ring ID assigned to span E-F. In the exemplary situation of Figure 5, this ring ID is equal to 0. Therefore, in this case, node E forwards the control packet to node F through its west-side port EW without modifying the ring ID.

The operations of nodes F and A0 on the control packet are similar to the operation of node E.

Upon reception of the control packet, node B0 processes the user packets UP by replacing the working label with the protection label. Then, based on the protection label, the node B0 switches the encapsulated user packets UP from the working path WP to the protection path PP0, namely it forwards the encapsulated user packets UP to the node A0 along the link L210.

Node A0, based exclusively on the protection label forwards the encapsulated user packets UP along the protection path PP0, namely to the node F along the link L260. The node A0 may also implement a label swapping technique, e.g. replace the protection label of the received encapsulated user packets UP with the protection label associated with the next span of the protection path PP0.

The operations of nodes F, E and D on the user packets UP is similar to the operation of the node A0. The encapsulated user packets UP travel along the protection path PP0, until they reach the node immediately downstream the failure FR in the direction of the working path WP, namely node C. Node C preferably processes the protection label and switches the user packets UP from the protection path PP0 to the working path WP. The user packets UP will then follow the working path WP up to node E.

Figure 7 shows a further working path WP' (in particular, a working LSP) which originates at node A0 of ring R0 (which is accordingly its source node) and terminates at node A1 of ring R1 (which is accordingly its destination node). In a failure-free scenario, the source node A0 encapsulates user traffic to be transmitted to the destination node A1 along the further working path WP' in further user packets UP', which are then carried by the further working path WP' along the links L110, L120, L221 and L211.

It is now assumed that a failure FR' occurs on the link L211, as shown in Figure 7.

According to the method of the present invention, when the failure FR' occurs, node A1 preferably inserts within a control packet the ring ID assigned to span A1-E1 for the protection switching instance provisioned in ring R1, i.e. a ring ID equal to 0 according to the assignment scheme of Figure 5 and sends the control packet to node E1 though its east-side port A1E.

Upon reception of the control packet from node A1, node E1 preferably recovers, based on the ring ID value in the received control packet and the identifier of the incoming west-side port E1W, the east-side ring ID of the couple of ring IDs associated with the protection switching instance provisioned in ring R1, namely the ring ID assigned to span E1-D, and the identifier of the outgoing east-side port E1 E. In the exemplary situation of Figure 5, this ring ID is equal to 0. Therefore, in this case, node E1 forwards the control packet to node D through its east-side port E1 E without modifying the ring ID.

Upon reception of the control packet from node E1, node D preferably recovers, based on the ring ID value contained in the received control packet and the identifier of the incoming west side port DW', the east-side ring ID of the couple of ring IDs associated with the protection switching instance in ring R1, namely the ring ID assigned to span C-D. Node D further recovers the identifier of the outgoing east-side port DE associated with the protection switching instance in ring R1. In the exemplary situation of Figure 6, the recovered ring ID is equal to 1. Therefore, in this case, node D preferably replaces the ring ID of the received control packet with the recovered east-side ring ID and sends the control packet to node C though its east-side port DE. Upon reception of the control packet, node C preferably recovers, on the basis of the ring ID value in the received packet and the identifier of the incoming west-side port CW, the east-side ring ID of the couple of ring IDs associated with the protection switching instance of ring R1 (namely the ring ID assigned to span B1-C), which, in this exemplary situation, is equal to 0. Therefore, node C preferably replaces the ring ID of the received control packet with the recovered east-side ring ID and sends the control packet to node B1.

Once nodes A1 and B1 switch the further user packets UP' from the failed further working path WP' to the protection path PP1, the further user packets UP' are transmitted from node B1 to node A1 along the protection path PP1.

In the two-ring network of Figures 6 and 7, node C and node D perform a swapping operation on the ring IDs carried by the control packets that are to be forwarded along shared span C-D, so that each control packet that travels between node C and node D carries the ring ID assigned to span C-D as belonging to the appropriate protection switching instance. Namely, if the control packet is destined to ring R1, .., R8, the ring ID is swapped at node C or at node D so that the control packet carries the ring ID associated with the protection switching instance provisioned in ring R1, ..., R8, respectively. The ring IDs assigned to span C-D are different for the different protection switching instances provisioned over this span. In the exemplary situation described above, if a control packet received at node C is destined to ring R1, .., R8 through node D, node C replaces the ring ID value carried by the control packet, which is equal to 0, with ring ID values 1, ..., 8, respectively.

It is to be noticed that in the whole communication network CN, also node E and node F, which belong to span E-F shared between ring R0 and rings R9-R16, perform the same operations described above with reference to node C and node D.

The method of the present invention advantageously allows to efficiently use all the network resources available for protection. Indeed, thanks to the assignment procedure described above, which provides for assigning different ring IDs to identify the same protection path on different spans, it is possible to provision all the protection paths that can be supported by the nodes of the communication network. Indeed, it is not necessary to identify a unique ring ID per each protection path. According to the method of the present invention, the ring IDs of different protection paths need to have different values only on spans which are shared between rings, while on the other spans they may have all the same value. This makes more efficient the usage of network resources.

Moreover, the scalability of the network is also improved. When a new ring is to be added, the method of the present invention provides for using a different ring ID only on the spans of the new ring that are shared with other already deployed rings. Assignment of ring IDs is in this case very straightforward and node configuration does not result in any traffic hit as the ring IDs of already provisioned protection paths are not to be changed.

## Claims

1. A method for controlling protection switching in a communication network (CN), said communication network (CN) comprising a number of nodes interconnected to form a first ring (R0) and a second ring (R1-R8), wherein said network (CN) comprises a shared span (C-D) between said first ring (R0) and said second ring (R1-R8), a first span (B0-C) and a second span (B1-C), wherein said shared span (C-D) connects a first node (C) and a second node (D) of said communication network (CN), said first span connects said first node and a third node (B0) of said first ring (R0) and said second span connects said first node (C) and a fourth node (B1) of said second ring (R1), said first node (C) comprising, at a first side thereof, a first port (CW) towards said shared span and, at a second opposite side thereof, a second port (CE) towards said first span (B0-C) and a third port (CE') towards said second span (B1-C), said method comprising:
a) assigning first ring identifiers to the spans of said first ring (R0);
b) assigning second ring identifiers to the spans of said second ring (R1), so that the first ring identifier and the second ring identifier assigned to said shared span (C-D) have different values and at least two spans of said second ring (R1) are assigned respective second ring identifiers having different values; and
c) at said first node (C), controlling protection switching in said first ring (R0) using, on said first port (CW), the first ring identifier assigned to said shared span (C-D) and/or, on said second port (CE), the first ring identifier assigned to said first span (B0-C), and/or controlling protection switching in said second ring (R1) using, on said first port (CW), the second ring identifier assigned to said shared span (C-D) and/or, on said third port (CE'), the second ring identifier assigned to said second span (B1-C).

2. The method according to claim 1, wherein step a) comprises assigning a first pre-determined value of first ring identifiers to all the spans of the first ring (R0) that are not shared with the second ring (R1).

3. The method according to claim 2, wherein step b) comprises assigning a second pre-determined value of second ring identifiers to all the spans of the second ring (R1) that are not shared with the first ring (R0).

4. The method according to claim 3, wherein said first pre-determined value and said second pre-determined value are equal.

5. The method according to any of the preceding claims, wherein it further comprises, at said first node (C) and before step c), configuring said first node (C) with first information comprising said first ring identifier assigned to said shared span (C-D), an identifier of said first port (CW), said first ring identifier assigned to said first span (B0-C) and an identifier of said second port (CE), and second information comprising said second ring identifier assigned to said shared span (C-D), an identifier of said first port (CW), said second ring identifier assigned to said second span (B1-C) and an identifier of said third port (CE').

6. The method according to claim 5, wherein said controlling protection switching at step c) comprises issuing or forwarding a control packet.

7. The method according to claim 6, wherein said using comprises inserting said first ring identifier assigned to said shared span (C-D) or said first ring identifier assigned to said first span (B0-C) or said second ring identifier assigned to said shared span (C-D) or said second ring identifier assigned to said second span (B1-C) into said control packet.

8. The method according to claim 7, wherein said method further comprises, at said first node (C), receiving a further control packet from said third node (B0), said further control packet being directed to a further node of said first ring (R0), picking out from the received control packet said first ring identifier assigned to said first span (B0-C), identifying said second port (CE) though which the further control packet is received and, on the basis of said first ring identifier and said identifier of said second port (CE), recovering said first ring identifier assigned to said shared span (C-D) and said identifier of said first port (CW), replacing, within said further control packet, said first ring identifier assigned to said first span (B0-C) with said first ring identifier assigned to said shared span (C-D) and forwarding said further control packet to said second node (D) through said first port (CW).

9. A communication network (CN) comprising a number of nodes interconnected to form a first ring (R0) and a second ring (R1-R8), wherein said network (CN) comprises a shared span (C-D) between said first ring (R0) and said second ring (R1-R8), a first span (B0-C) and a second span (B1-C), wherein said shared span (C-D) connects a first node (C) and a second node (D) of said communication network (CN), said first span connects said first node and a third node (B0) of said first ring (R0) and said second span connects said first node (C) and a fourth node (B1) of said second ring (R1), said first node (C) comprising, at a first side thereof, a first port (CW) towards said shared span and, at a second opposite side thereof, a second port (CE) towards said first span (B0-C) and a third port (CE') towards said second span (B1-C), said network further comprising a network management system, said network management system being configured to:
- assign first ring identifiers to the spans of said first ring (R0);
and
- assign second ring identifiers to the spans of said second ring (R1), so that the first ring identifier and the second ring identifier assigned to said shared span (C-D) have different values and at least two spans of said second ring (R1) are assigned respective second ring identifiers having different values,
wherein said first node (C) is configured to control protection switching in said first ring (R0) using, on said first port (CW), the first ring identifier assigned to said shared span (C-D) and/or, on said second port (CE), the first ring identifier assigned to said first span (B0-C), and/or control protection switching in said second ring (R1) using, on said first port (CW), the second ring identifier assigned to said shared span (C-D) and/or, on said third port (CE'), the second ring identifier assigned to said second span (B1-C).

10. The communication network (CN) according to claim 9, wherein said communication network (CN) is an MPLS or MPLS-TP communication network.
